# EUROPÄISCHE PATENTSCHRIFT

(11) **EP 1 967 307 B1**
(45) Veröffentlichungstag und Bekanntmachung des Hinweises auf die Patenterteilung: **26.05.2010**
(21) Anmeldenummer: 07004763.4
(22) Anmeldetag: 08.03.2007
(51) Int. Cl.: B23C 3/28, B23C 3/34

(54) **Verfahren zur Herstellung eines mit Nuten versehenen Rotornabenelementes**
Method for manufacturing a rotor hub element with grooves
Procédé de fabrication d'un élément de moyeu de rotor pourvu de rainures

(43) Veröffentlichungstag der Anmeldung: 10.09.2008
(73) Patentinhaber: Rutschinski, Mattias, 96317 Kronach (DE); Bauer, Joachim, 92714 Pleystein (DE)
(72) Erfinder: Rutschinski, Mattias, 96317 Kronach (DE); Bauer, Joachim, 92714 Pleystein (DE)
(74) Vertreter: Hafner, Dieter

(56) Entgegenhaltungen:
- EP-B1- 0 792 709
- EP-B1- 1 356 886
- WO-A-01/96055
- DE-A1- 10 327 623
- DATABASE WPI Week 200035 Derwent Publications Ltd., London, GB; AN 2000-405342 XP002444927 -& JP 2000 141120 A (TOSHIBA MACHINE CO LTD) 23. Mai 2000 (2000-05-23)

## Beschreibung

Die Erfindung/Neuerung betrifft ein Verfahren zur Herstellung eines mit Nuten versehenen Rotornabenelementes einer Fluidenergiemaschine, insbesondere Flugzeugturbine, Kraftwerksturbine oder dergleichen, gemäß dem Oberbegriff des Anspruchs 1. Ein derartiges Verfahren ist aus dem Dokument WO 01/96 055 A1 bekannt.

Aus dem Stand der Technik sind Herstellungsverfahren zur Einbringung von Haltenuten in Rotornabenelemente zur Fixierung von Turbinenschaufeln bekannt, bei denen eine Vielzahl an Fräsern verwendet werden, die zumindest im Schruppverfahren sich durch mehrere Verfahrensgänge und durch mehrere verschiedene Schruppfräser an die Endkontur der Nuten annähern. Dabei werden diese Schruppfräser mit einem streng linearen Vorschub durch das Material des Rotornabenelementes zu dessen definiertem Abtrag geführt. Dieses Verfahren ist aufgrund der Vielzahl an Schruppfräsern und des damit verbundenen häufigen Werkzeugwechsels sehr aufwendig und auch sehr zeitintensiv. So wird beispielsweise in einem ersten Schritt eines herkömmlichen Verfahrens sogenannte Vornuten mittels eines Scheibenfräsers eingefräst, deren Randbereiche werden dann in einem weiteren Schritt mit einer schlüssellochartigen Struktur, abhängig vom Hersteller, weiterbearbeitet. Es sind in der Regel viele Verfahrensschritte erforderlich, damit mit der erforderlichen Genauigkeit die entsprechenden Profile in das Rotornabenelement eingebracht werden können. So dauert beispielsweise bei dem oben angeführten Verfahren die Bearbeitung eines derartigen Rotornabenelementes etwa 75 Minuten pro Nut und ist damit entsprechend kostenaufwendig. Ferner gilt es zu berücksichtigen, daß die Rohlinge für die Rotornabenelemente bereits ein sehr aufwendiges Herstellungsverfahren hinter sich haben (Legierungszusammensetzung; Wärmebehandlung) und deshalb bei deren weiterer Verarbeitung höchste Sorgfalt geboten ist.

WO 01/96055 A1 beschreibt im wesentlichen ein wie im vorhergehenden Absatz beschriebenes Verfahren, wonach zum Fräsen von Tannenbaumnuten auf dem Umfang einer Turbinenwelle zur Aufnahme von Schaufelfüßen zunächst in drei Bearbeitungsstufen eine abgetreppte verjüngte Vorform des Nutenquerschnittes vorgefräst wird. Aus dieser Vorform wird mindestens der wesentliche Teil der durch Hinterschneidungen in den Stufenflanken charakterisierten Tannenbaum-Querschnittsform in einem Werkzeugdurchlauf mittels eines Profilfräsers ausgefräst.

Ferner ist zur Fertigung von Bauteilen aus schwer zerspanbaren Werkstoffen für Turbomaschinen, Luft- und Raumfahrzeugen unter Erzeugung von Vertiefungen mit einer oder mehreren Seitenwänden ein Fräsverfahren bekannt, das ein Fräswerkzeug zusätzlich zur exzentrischen Rotation um seine Achse eine exzentrische Kreisbewegung um eine von seiner Achse beabstandeten Kreisbahnachse ausführt. Dabei vollzieht die Kreisbahnachse einschließlich des sich exzentrisch um sie herum bewegenden Fräswerkzeugs quer zu ihrer Längsrichtung eine translatorische Vorschubbewegung auf einer geraden und/oder gekrümmten Bahn mit oder ohne Schwenkbewegung.

Der Erfindung/Neuerung liegt die Aufgabe zugrunde, ein Verfahren zur Herstellung eines mit Nuten versehenen Rotornabenelementes einer Fluidenergiemaschine mit den Merkmalen des Oberbegriffes des Anspruches 1 derart weiterzubilden, daß das Rotomabenelement innerhalb einer kurzen Bauzeit und mit hoher Maßgenauigkeit gefertigt werden kann. Eine weitere Aufgabe ist es, mittels des Verfahrens eine in Summe wirtschaftliche Herstellung der Rotornabenelemente zu gewährleisten, einerseits durch die schnellere Bauzeit, aber auch andererseits durch die Reduzierung der Anzahl der benötigten Fräsköpfe, als auch durch eine Verminderung des Verschleißes der Fräsköpfe. Diese Aufgabe wird durch die Merkmale des Anspruches 1 gelöst, vorteilhafte Weiterbildungen der Erfindung ergeben sich aus den Unteransprüchen 2-18.

Als Kern der Erfindung wird es angesehen, daß das Herstellungsverfahren folgende Schritte aufweist. Anfangs wird ein ungenutetes oder vorgenutetes Rotomabenelement bereitgestellt, das unter Verwendung eines ersten Schruppfräsers für einen ersten Tiefenbereich der Nut und anschließend mit einem zweiten Schruppfräser für einen zweiten Tiefenbereich der Nut bearbeitet wird. Die Nachbearbeitung des Rotornabenelementes erfolgt mittels mindestens einem Schlichtfräser und/oder eines Polierwerkzeuges. Dabei ist zumindest einer der Schruppfräser mindestens bereichsweise der Konturform wenigstens eines entsprechenden Nutentiefenbereiches angepaßt und wird mit einer zykloiden Vorschubbewegung verfahren. Die zu fräsende Nut des Rotornabenelementes wird in mindestens zwei Bereiche, die sich durch ihren Abstand zum Rotornabenelementzentrum unterscheiden, also sich von dem Nuttiefenbereich ausgehend von der Außenkante des Rotornabenelementes unterscheidet, unterteilt. So kann beispielsweise in einer in zwei Tiefenbereiche unterteilten Nut ein erster Schruppfräser den oberen Nutbereich (dem vom Rotomabenelementzentrum weiter entfernten Bereich) bearbeiten und ein zweiter Schruppfräser einen an den ersten Tiefenbereich angrenzenden und/oder überschneidenden zweiten Tiefenbereich der Nut bearbeiten. Wesentlich ist hierbei, daß zumindest ein Schruppfräser der Konturform wenigstens eines entsprechenden Nutentiefenbereiches mindestens bereichsweise angepaßt ist, damit wird erreicht, daß mit weniger Schruppfräsern die gewünschte, gegebenenfalls komplexe Konturform der Nut herausgefräst werden kann. Damit nun ein derart an die gewünschte Konturform der Nut angepaßter Schruppfräser zuverlässig arbeiten kann, ist es wesentlich, diesen Schruppfräser in einer zykloiden Vorschubbewegung zu verfahren und ihn von einer ersten Stirnfläche zu einer gegenüberliegenden Stirnfläche durchlaufen zu lassen oder ihn von einer Stirnfläche des Rotomabenelementes beginnend eine endseitig begrenzte, zumindest abschnittsweise profilierte Nut einarbeiten zu lassen. Unter der zykloiden Vorschubbewegung ist zu verstehen, daß der Fräser zusätzlich zur zentrischen Rotation um seine eigene Längsachse eine exzentrische kreis- oder bogenförmige Bewegung ausführt. Die von dem Fräser beschriebene Bahn kann beispielsweise verlaufen wie die Projektion einer gescherten Spirale auf eine Grundfläche. Ebenso könnte die Bewegungsbahn auch die Form eines verlängerten zykloiden aufweisen. Eine derartige Kurve entsteht dann, wenn ein mit einem auf einer geraden oder gekrümmten Bahn rollender Körper verbundener Punkt eine Kurve beschreibt. Die erfindungsgemäße zykloide Bewegung kann auch lineare Anteile aufweisen,. so beispielsweise die Bewegungsbahn eines Halbkreises. Durch die zykloide Vorschubbewegung ist die auf die Schneiden des Schruppfräsers wirkende Last gleichmäßig verteilt und wirkt auch auf eine kleinere Fläche, was sich positiv auf den Verschleiß und auf die mögliche fahrbare Wirkgeschwindigkeit des Schruppfräsers auswirkt und erst die Verwendung eines Schruppfräsers mit an Nutkonturformen angepaßten Schneiden ermöglicht. Die Zeitersparnis, die mittels des erfindungsgemäßen Herstellungsverfahrens in Verbindung mit den speziellen Schruppfräsern erreicht werden kann, beträgt eine um auf ein Zehntel gesenkte Bearbeitungszeit. Im oben angeführten Beispiel würde der Bearbeitungszyklus ca. 10 Minuten pro Nut benötigen. Ein besonders günstiges und zeitsparendes Herstellungsverfahren läßt sich dadurch erreichen, daß sämtliche Schruppfräser in ihrer Konturform im wesentlichen der Endkonturform des jeweils zu bearbeitenden Nuttiefenbereiches entsprechen.

Um die Anzahl der benötigten Schruppfräser auf ein Minimum zu reduzieren, ist es vorteilig, die verwendeten Schruppfräser mindestens überwiegend, vorzugsweise sogar gänzlich der Konturform des entsprechenden Nutbereiches anzupassen.

Vorteilhaft ist es auch, wenn zumindest eine Nut zur Aufnahme einer Turbinenschaufel in wenigstens zwei, bezogen auf die Beabstandung zum Zentrum des Rotomabenelementes, unterschiedliche Bereiche unterteilt ist und die wenigstens zwei Bereiche unterschiedliche Konturformen aufweisen. Dadurch, daß die mindestens zwei verschiedenen Bereiche unterschiedliche Konturformen aufweisen, wird es erreicht, größere Freiheiten für die Konstruktion der stoff- und/oder formschlüssigen Anbindung der Turbinenschaufeln mit dem Rotomabenelement zu gewähren. Beispielsweise können die mindestens zwei Nuttiefenbereiche durch den eingeschnürten Bereich definiert werden. Darüber hinaus hat es sich als günstig erwiesen, wenn die Nuten im wesentlichen eine Keilform aufweisen und derart ausgerichtet sind, daß deren verjüngendes Ende zum Zentrum des Rotomabenelementes weist. Speziell die Ausgestaltung der Nut als abstrahierte Keilform mit mehreren Einschnürungen - vergleichbar einer tannenbaumartigen Struktur - ermöglicht eine bevorzugte Anbindung der Turbinenschaufel an das Rotornabenelement.

Ebenso ist es vorteilhaft für den Nachbearbeitungsschritt der nach Beendigung der Schruppfräserbearbeitung folgt, wenn mindestens zwei Fräser, wie beispielsweise ein Schlichtfräser und ein Polierwerkzeug verwendet werden.

Bevorzugt weist zumindest einer der Schruppfräser in seiner Längserstreckung wenigstens einen eingeschnürten Konturbereich auf und ist innerhalb und/oder über diesen Konturbereich hinweg mit Schneiden versehen. Dies bedeutet beispielsweise, daß ein Schruppfräser eine kreiszylindrische Grundform aufweist, die mindestens einen eingeschnürten Bereich besitzt und der Schruppfräser entweder nur über seine Mantelfläche - samt der Einschnürung - mit Schneiden versehen ist oder sowohl an seiner Mantelfläche als auch an seiner endständigen Stirnfläche mit Schneiden versehen ist. Letzterer Fall ist insbesondere dann von Vorteil, wenn der Schruppfräser nicht nur eine Seitwärtswirkbewegung vollzieht, sondern auch dann, wenn der Schruppfräser zum Zentrum des Rotornabenelementes hin verfahren wird, so daß mit seiner Stirnfläche Material abgetragen wird.

Besonders vorteilhaft ist es, wenn der Durchmesser des Schruppmessers kleiner ist als die Spaltenbreite der Nut des jeweiligen Tiefenbereiches. So kann der Durchmesser des Schruppfräsers in einem Bereich zwischen 40 und 90 %, vorzugsweise in einem Bereich zwischen 55 und 85 % der Spaltenbreite der Nut des jeweiligen Tiefenbereiches betragen. Eine derartige Dimensionierung des Schruppfräsers relativ zu der von ihm zu fräsenden Nut und dem daraus entstehenden Zwischenraum erlaubt eine verfahrenstechnisch günstige Auslegung der zykloiden Vorschubbewegung des Schruppfräsers. So kann dadurch auf einfache Weise die Späne aus der Nut über den Zwischenraum abgeführt werden.

Um für die Nachbearbeitung mit möglichst wenigen Werkzeugen auszukommen, ist es vorteilhaft, wenn der Schlichtfräser und/oder das Polierwerkzeug in seiner Konturform der Konturform der gesamten Nut (sämtlicher Nuttiefenbereiche) entspricht.

Mit der erfindungsgemäßen zykloiden Vorschubbewegung mindestens eines Schruppfräsers können auch kompliziertere Nutformen realisiert und damit gefertigt werden. So ist es möglich, daß neben einfacheren Nutformen, bei denen der Fräsers, im wesentlichen linear und parallel zu der Rotationsachse des Rotornabenelementes dieses durchfährt, auch andere Bahnverläufe für die Wirkbewegung des Fräsers möglich sind. Beispielsweise kann einer der Fräser das Rotornabenelement in einer im wesentlichen linearen, mit der Rotationsachse, bezogen auf die X-Z-Ebene und/oder die X-Y-Ebene, einen spitzen Winkel einschließende Bewegungsbahn durchfahren. Hierbei ist die Definition der Ebenen so zu verstehen, daß die im wesentlichen kreisrunde Stirnfläche des in der Regel kreiszylindrischen Rotornabenelementes parallel zu der Y-Z-Ebene liegt. Des weiteren kann es auch vorgesehen sein, daß zumindest einer der Schruppfräser in seiner Wirkbewegung das Rotationselement in einer zumindest bereichsweise in der X-Z-Ebene und/oder der X-Y-Ebene gekrümmten Bewegungsbahn durchfährt. Mit den beiden beispielhaften Bewegungsbahnen können kompliziertere Nutformen mit praktisch geringem bis keinem Mehraufwand realisiert werden und ermöglichen damit Herstellern gezielt komplexe schlüssellochartige Konturen für die Aufnahmenuten vorzusehen, um eine zuverlässigere und sicherere Anbindung der Turbinenschaufel an das Rotornabenelement zu schaffen.

Die Bewegung des Schneidwerkzeuges, beispielsweise des Fräsers, ist in eine Schnittbewegung (Spanungsbewegung in Schnittrichtung), eine Vorschubbewegung (kontinuierliche Bewegung des Werkzeuges relativ zum Werkstück) und eine Wirkbewegung (Überlagerung von Schnitt- und Vorschubbewegung) unterteilt.

Die Erfindung ist anhand von Ausführungsbeispielen in den Zeichnungsfiguren näher erläutert. Diese zeigen
- Fig. 1: eine schematische Darstellung eines ersten Schruppfräsers in einem ersten Nuttiefenbereich;
- Fig. 2: eine schematische Darstellung eines zweiten Schruppfräsers innerhalb eines zweiten Nuttiefenbereiches;
- Fig. 3: eine schematische Darstellung eines dritten Schruppfräsers innerhalb eines dritten Nuttiefenbereiches;
- Fig. 4a-c: eine schematische Darstellung der jeweils nach dem ersten (A), zweiten (B) und dritten (C) Schruppfräser geschaffenen Nutkonturen;

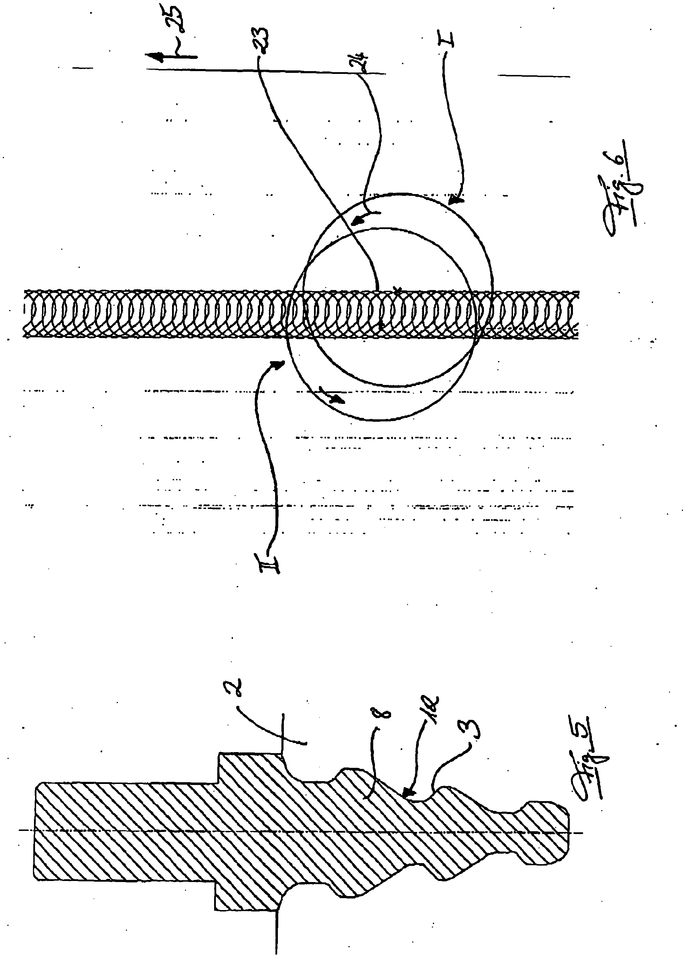

- Fig. 5: eine schematische Darstellung eines Schlichtfräsers;
- Fig. 6: eine schematische Darstellung der Bewegungsbahn eines Schruppfräsers in der Draufsicht;
- Fig. 7a-b: eine schematische Draufsicht (a) und Vorderansicht (b) einer geradlinigen Nut;

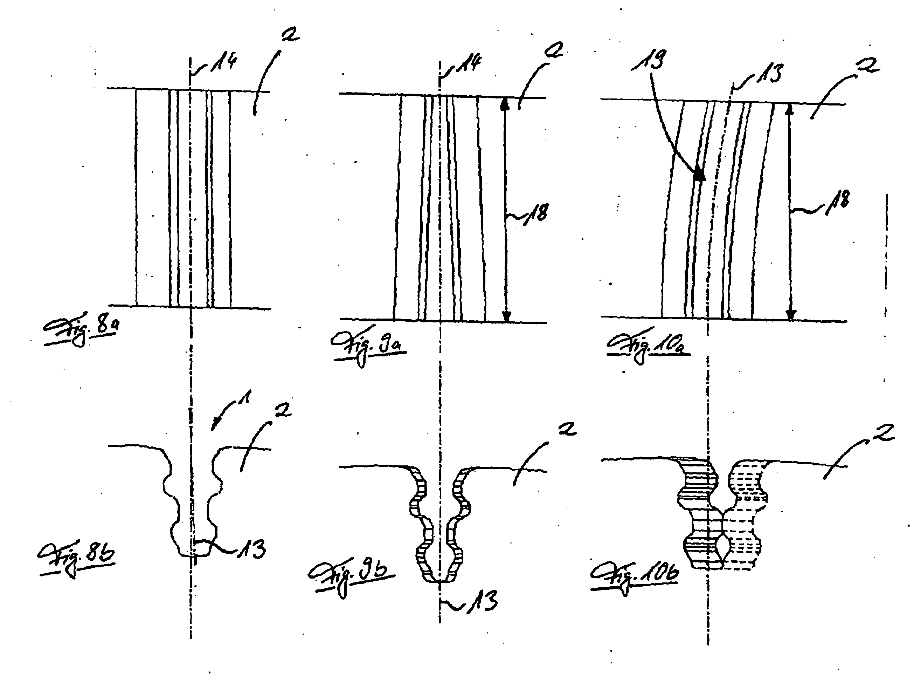

- Fig. 8a-b: eine schematische Draufsicht (a) und Vorderansicht (b) einer gekippten Nut;
- Fig. 9a-b: eine schematische Draufsicht (a) und Vorderansicht (b) einer sich verjüngenden Nut;
- Fig. 10a-b: eine schematische Draufsicht (a) und Vorderansicht (b) einer gekrümmten Nut;

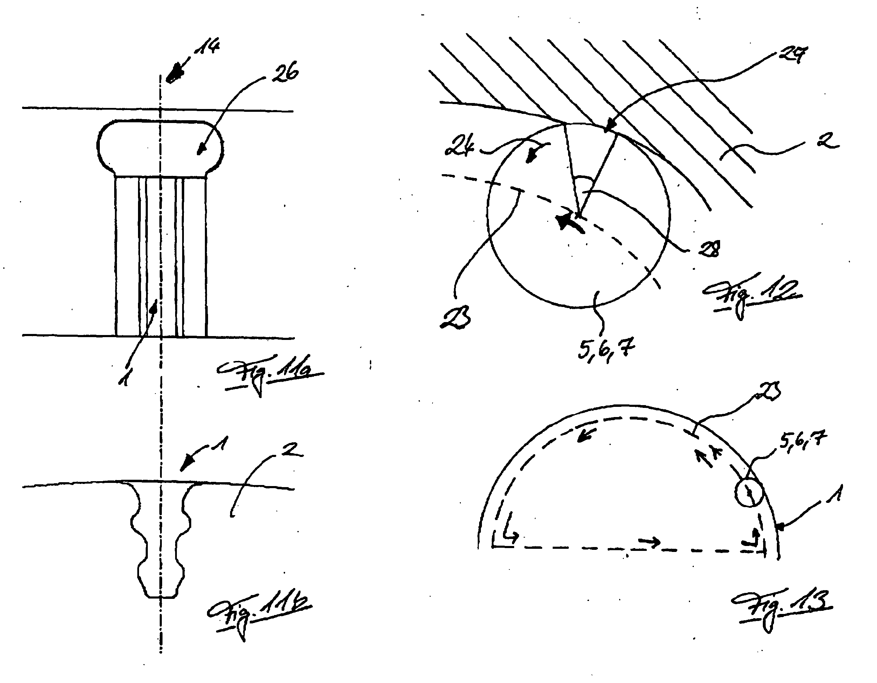

- Fig. 11a-b: eine schematische Draufsicht (a) und Vorderansicht (b) einer sacklochartigen Nut;
- Fig. 12: eine schematische Detaildarstellung eines im Eingriff mit dem Werkstück stehenden Fräsers;
- Fig. 13: eine schematische Darstellung einer Vorschubbewegungsbahn.

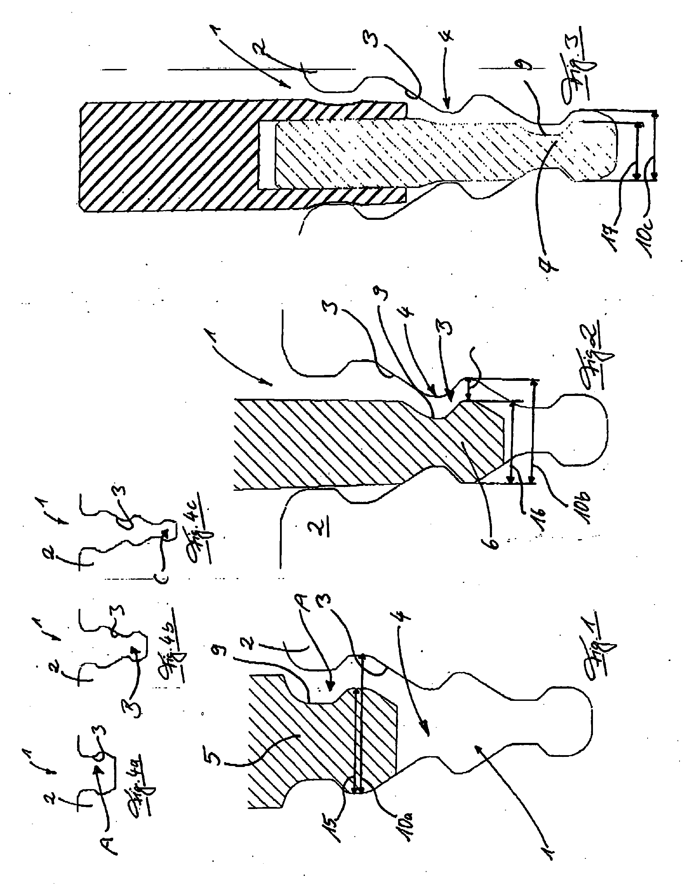

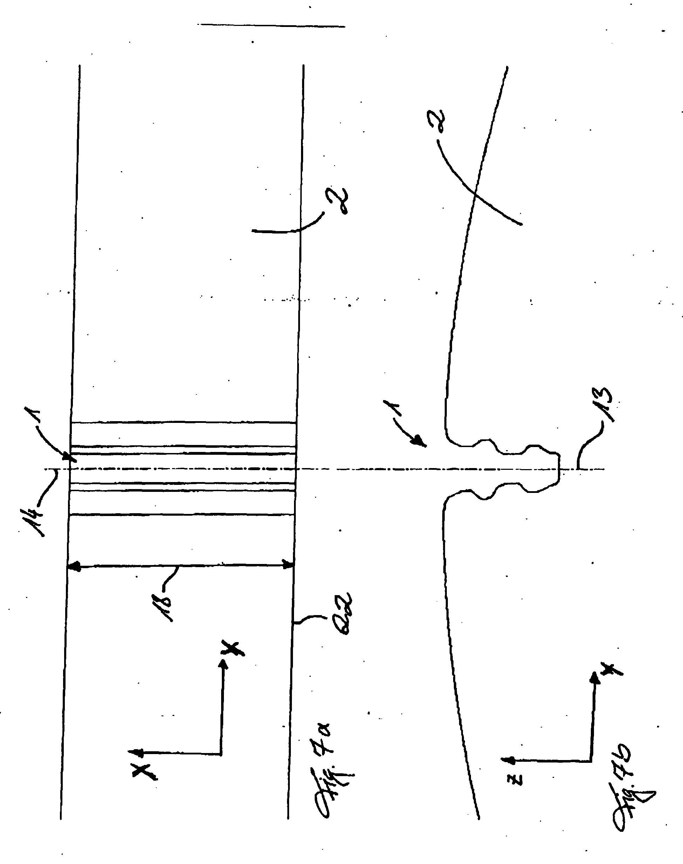

Figur 7a und b zeigen ein Verfahren zur Herstellung eines mit Nuten 1 versehenen Rotornabenelementes 2 einer Fluidenergiemaschine oder dergleichen, wobei in die Nuten 1 die radial inneren Enden von Turbinenschaufeln (nicht dargestellt) aufnehmbar sind und die Konturform 3 der Nuten 1 mindestens einen eingeschnürten Bereich 4 aufweist. Dieses Verfahren zeichnet sich dadurch aus, daß ein ungenutetes oder vorgenutetes Rotornabenelement 2 unter Verwendung eines ersten Schruppfräsers 5 innerhalb eines ersten Nuttiefenbereiches A und gemäß Figuren 2 und 4b mit einem zweiten Schruppfräser 6 den zweiten Tiefenbereich B der Nut 1 bearbeitet. In einer bevorzugten Ausführungsform wird ein dritter Schruppfräser 7 für einen dritten Tiefenbereich C der Nut 1 verwendet. Nach der Bearbeitung der Nut 1 mit mindestens 2 Schruppfräsern 5, 6, 7 folgt ein Nachbearbeitungsschritt, mittels dem die Nut 1 mit mindestens einem Schlichtfräser 8 und/oder Polierwerkzeug bearbeitet wird. Wesentlich bei dem Herstellungsverfahren ist weiter, daß zumindest ein Schruppfräser 5, 6, 7 der Konturform 3 wenigstens eines entsprechenden Nuttiefenbereiches A, B, C, mindestens bereichsweise angepaßt ist und der zumindest eine Schruppfräser 5, 6, 7 in einer zykloiden Vorschubbewegung 23 verfahren wird.

In den Zeichnungsfiguren 4a-4c ist dargestellt, wie die Konturform 3 der Nut 1 nach dem jeweiligen Schruppfräser 5, 6, 7 bzw. nach den einzelnen Schruppfräserphasen ausgebildet ist. Eine genauere Darstellung, wie die Schruppfräser 5, 6, 7 die jeweiligen Bereiche A, B, C bearbeiten, geht aus den Zeichnungsfiguren 1 - 3 hervor, wobei die Endkonturform 3 in allen drei Zeichnungsfiguren bereits dargestellt ist.

Wie aus Zeichnungsfigur 1 beispielhaft zu erkennen ist, weist der Schruppfräser 5 die Konturform 3 des ersten Nuttiefenbereiches A auf. Der im zweiten Schritt verwendete zweite Schruppfräser 6 entspricht wiederum der Konturform 3 des zweiten Tiefenbereiches B der Nut 1. In dem dargestellten Ausführungsbeispiel sind die Zuordnungen der Bereiche A, B, C zu den jeweiligen Schruppfräsern 5, 6, 7 sehr streng vorgenommen. Es kann jedoch auch vorgesehen sein, daß die Schruppfräser 5, 6, 7 in die gegebenenfalls schon bearbeiteten Tiefenbereiche A, B, C eines eigentlich einem anderen Schruppfräser 5,6,7 zugeordneten Nuttiefenbereichs A, B, C mit hineinreicht.

Die Tiefenbereiche A, B, C der Nuten 1 unterscheiden sich untereinander dadurch, daß sie unterschiedliche Abstände zum Zentrum (nicht dargestellt) des Rotornabenelements 2 aufweisen. Darüber hinaus können sie sich durch ihre Konturform 3 und/oder durch ihre Dimensionierung unterscheiden. So weist die in den Zeichnungsfiguren dargestellte Nut 1 im wesentlichen eine Keilform auf, die mit dem sich verjüngenden Ende zum Zentrum des Rotationselementes 2 hinweist. Darüber hinaus kann das dargestellte Nutprofil 3 als im wesentlichen tannenbaumartig bezeichnet werden.

Damit die Schruppfräser 5, 6, 7 im wesentlichen der Endkonturform 3 des jeweils zu bearbeitenden Nuttiefenbereiches A, B, C entsprechen, ist es erforderlich, daß die Schruppfräser 5, 6, 7 in ihrer Längserstreckung wenigstens einen eingeschnürten Konturbereich 9 aufweisen und innerhalb und/oder über diesen Konturbereich 9 hinweg mit Schneiden (nicht dargestellt) versehen sind.

Wie in den Zeichnungsfiguren 1 - 3 dargestellt, ist der Durchmesser 15, 16, 17 der Schruppfräser 5, 6, 7 kleiner als die Spaltenbreite 10a, 10b, 10c der Nut 1 des jeweiligen Tiefenbereichs A, B, C. In den o.g. Zeichnungsfiguren wird der Durchmesser 15, 16, 17 der Schruppfräser 5, 6, 7 beispielhaft am maximalen Durchmesser des Fräsers 5, 6, 7 angesetzt und dazu mit der maximalen Spaltenbreite 10a, 10b, 10c des korrespondierenden Tiefenbereiches A, B, C der Nut 1 gegenübergestellt.

Selbstverständlich ist es nicht zwingend erforderlich, daß der Fräser 5, 6, 7 die Form eines Rotationskörpers hat, um seinen Durchmesser, 15, 16, 17 zu bestimmen. Es ist auch möglich einen Nichtrotationskörper um eine Achse rotieren zu lassen, so daß er bei seiner Bewegung einen Rotationskörper beschreibt und im erfindungsgemäßen Sinne einen Durchmesser 15, 16, 17 aufweist.

In den Zeichnungsfiguren 1 - 3 ist ferner ein Zwischenraum 11 dargestellt, der durch die Differenz des Durchmessers 15, 16, 17 und der jeweils dazugehörigen Spaltenbreite 10a, 10b, 10c geschaffen wird. Durch den Zwischenraum 11 wird die zykloide Vorschubbewegung des Schruppfräsers 5, 6, 7 ermöglicht. Ferner bietet sich der Zwischenraum 11 zum Heraustransportieren der Späne aus dem Werkstück 2 an.

In der Zeichnungsfigur 5 ist der Schlichtfräser 8 dargestellt, der in seiner Konturform 12 in einer bevorzugten Ausführungsform der Konturform 3 der gesamten Nut 1 entspricht.

In den im Folgenden beschriebenen Zeichnungsfiguren 7a-10b sind unterschiedliche Ausgestaltungen der in das Rotornabenelement 2 eingebrachten Nuten 1 dargestellt. In der in Zeichnungsfigur 7a dargestellten Draufsicht und der dazugehörigen Vorderansicht 7b ist eine wie oben beschriebene, tannenbaumartige mit dem sich verjüngenden Endbereich zum Zentrum des Rotornabenelements weisenden Ende dargestellte Nut 1 gezeigt. Die Symmetrieachse 13 der symmetrischen Nut 1 ist dabei parallel zu der Rotationsachse 14 des Rotornabenelements ausgerichtet. In dem Ausführungsbeispiel gemäß der Zeichnungsfigur 7a, 7b, 8a, 8b, 9a und 9b fallen die beiden Achsen (Symmetrieachse 13 wie auch Rotationsachse 14) in der Draufsicht (7a, 8a, 9a) aufeinander.

Die Nut 1 aus der in Zeichnungsfigur 8a und 8b dargestellten Ausführungsform verläuft mit Ihrer Symmetrieachse 13 gekippt relativ zu der radialen Erstreckungslinie ausgehend vom Zentrum des Rotornabenelementes 2.

Die in den Zeichnungsfiguren 9a und 9b dargestellte Nut 1 verjüngt sich entlang der Breite 18 des Rotornabenelementes 2. Eine derartige Verjüngung der Nut 1 kann durch das erfindungsgemäße Verfahren auf einfache Weise hergestellt werden, indem die Durchmesser der zykloiden Vorschubbewegung, also die Radien der kreisförmigen Vorschubbewegung entlang der Breite 18 des Rotornabenelementes variieren.

Darüber hinaus sind auch gebogene Nuten 1 in das Rotornabenelement 2 mittels des erfindungsgemäßen Herstellungsverfahrens auf einfache Weise einbringbar. Vergleiche hierzu Zeichnungsfiguren 10a und 10b. Bei der dort dargestellten Ausführung einer Nut 1 verläuft diese über die Breite 18 des Rotornabenelementes in einer gebogenen Bahn 19.

Ferner kann die Nut 1 auch eine Sacklochform aufweisen, d.h. nicht vollständig durch das Rotornabenelement 2 hindurchgehen, wie in den Zeichnungsfiguren 11 a und 11b dargestellt. Eine derartige Sacklochform für eine Nut 1 eines Rotornabenelementes 2 kann beispielsweise als natürliche Sicherung gegen ein Lösen der Turbinenschaufel im Betriebszustand dienen. In diesem Zusammenhang ist es zweckmäßig, wenn am Ende des Sackloches der Nut 1 ein Bereich 26 vorgesehen ist, der nicht zwangsläufig die Nutkonturform 3 fortsetzen muß und zur Aufnahme von weiteren Sicherungsmitteln, wie Splinten- oder Preßpassungsmitteln dienen kann.

Ferner ist es ebenfalls als zur Erfindung gehörend anzusehen, die Nut 1 mit Hilfe einer Kombination von den oben beschriebenen Nutenkonturformen 3 als auch Nutenbahnen zu konstruieren. So können die Nuten 1 über ihren Verlauf über die Breite 18 des Rotornabenelementes 2 in ihrer Tiefe variieren, so daß beispielsweise an einem ersten Endpunkt der Nut 1 ein erster Abstand zum Zentrum des Rotornabenelementes vorgesehen ist und in einem zweiten Endpunkt ein zum Abstand des ersten Endpunktes unterschiedlicher Abstand zum Zentrum des Rotornabenelementes 2 vorgesehen ist (nicht dargestellt).

Durch die zykloide Vorschubbewegung 23 des Schruppfräsers 5, 6, 7 wird es ermöglicht, daß der Schruppfräser 5, 6, 7 lediglich einen geringen Bereich des Rotornabenelementes 2 während des spanabhebenden Prozesses beaufschlagt/berührt. Die Berührfläche ist in der Draufsicht ein Kreisbogensegment, vgl. Bezugsziffer 27 in Zeichnungsfigur 12. In dieser Zeichnung ist auch der Umschlingungswinkel 28 dargestellt, der zusammen mit der Vorschubgeschwindigkeit die vom Schruppfräser aufzunehmenden Belastungen bestimmt. In diesem Zusammenhang ist es zweckmäßig, die Vorschubbewegung durch ein Prozessor gesteuertes Programm ausführen zu lassen, das bestrebt ist, einen gleichmäßigen Umschlingungswinkel oder die Vorschubgeschwindigkeit pro Zahn derart zu steuern und zu regeln, daß die vom Fräser aufzunehmenden Kräfte minimal sind und/oder eine möglichst hohe Geschwindigkeit des Verfahrens gefahren werden kann.

Um die benötigte Fertigungszeit weiter zu reduzieren, ist es zweckmäßig, wenn die zykloide Vorschubbewegung 23 "Eilgang-Abkürzungsbewegungen" vollzieht, d.h. daß die Vorschubbewegungsbahn beispielsweise in den Freizonen (berührungsfreie Prozeßbereiche, in denen der Fräser frei läuft) lineare oder abgekürzte Bewegungslinien fährt und diese in einer erhöhten Geschwindigkeit. Darüber hinaus ist es zweckmäßig, wenn bei den Anfahr- und Abfahrbewegungen des Fräsers 5, 6, 7 in bzw. aus dem Rotornabenelement 2 diese Bewegungen über einen Computer derart gesteuert werden, daß die auf den Schruppfräser 5, 6, 7 wirkenden Kräfte möglichst gering oder zumindest gleichmäßig im Vergleich zu den restlichen Spanabnahmephasen ist. Beispielsweise wird der Umschlingungswinkel 28 über den Verlauf des Fräsers 5, 6, 7 auf der Vorschubbewegungsbahn 23 über die Computersteuerung konstant gehalten. In einer linearen Vorschubbewegung beträgt der Umschlingungswinkel 28 beispielsweise 180°, in dem erfindungsgemäßen Verfahren beträgt der Umschlingungswinkel vorzugsweise 10 - 90°, insbesondere 20 - 40°.

Die Definition des in den Ansprüchen 17 und 18 verwendeten Koordinatensystems bzw. der darin beschriebenen Ebenen geht aus den Zeichnungsfiguren 7a und 7b hervor, wonach eine beispielhafte gerade Stirnfläche 22 des Rotornabenelementes 2 parallel zu einer von der Y- und Z-Achse aufgespannten Ebene verläuft.
In der Zeichnungsfigur 6 ist die Bewegungsbahn eines Schruppfräsers in der Draufsicht dargestellt. Der Fräser 5, 6, 7 rotiert um seine eigene Achse 26 (Schnittbewegung 24) die sich wiederum auf einer zykloiden Bewegungsbahn fortbewegt (Vorschubbahn 23). Aus der Überlagerung der Schnittbewegung 24 und der Vorschubbewegung 23 resultiert eine lineare Wirkbewegung 25 die entlang der Nut 1 verläuft. In der Zeichnungsfigur sind zwei Positionen I, II des Fräsers 5, 6, 7 dargestellt. In der ersten Position I ist der Fräser 5, 6, 7 an einer seitlichen Endlage angelangt und fährt von dort ausgehend nach links zu Position II, wobei die Rotationsachse 26 der Schnittbewegung 24 sich auf der Vorschubbahn 23 bewegt.

## Patentansprüche

1. Verfahren zur Herstellung eines mit Nuten (1) versehenen Rotornabenelementes (2) -einer Fluldenergiemaschine, insbesondere Flugzeugturbine, Kraftwerksturbine oder dergleichen, wobei in die Nuten (1) die radial inneren Enden von Turbinenschaufeln aufnehmbar sind und die Konturform (3) der Nuten (1) mindestens einen eingeschnürten Bereich (4) aufweist,
mit folgenden Verfahrensschritten:
a. Bereitstellen eines ungenuteten oder vorgenuteten Rotornabenelementes (2);
b. Verwendung eines ersten Schruppfräsers (5) für einen ersten Tiefenbereich (A) der Nut (1);
c. Verwendung eines zweiten Schruppfräsers (6) für einen zweiten Tiefenbereich (B) der Nut (1);
d. Nachbearbeitung der Nut (1) mit mindestens einem Schlichtfräser (8) und/oder Polierwerkzeug, wobei
zumindest ein Schruppfräser (5, 6, 7) der Konturform (3) wenigstens eines entsprechenden Nuttiefenbereiches (A, B, C) mindestens bereichsweise angepaßt ist,
**dadurch gekennzeichnet, daß**
beide Schruppfräser (5, 6, 7) in einer zykloiden Vorschubbewegung (23) derart verfahren werden, daß sie entweder das Rotornabenelement (2) von einer ersten Stirnfläche (22) zu einer gegenüberliegenden zweiten Stirnfläche durchlaufen oder von einer Stirnfläche (22) des Rotornabenelementes (2) beginnend eine endseitig begrenzte, zumindest abschnittsweise profilierte Nut (1) in das Rotornabenelement (2) einarbeiten, und daß
die Schruppfräser (5, 6, 7) in ihrer Konturform (9) im wesentlichen der Endkonturform (3) des jeweils zu bearbeitenden Nuttiefenbereiches (A, B, C) entsprechen.

2. Verfahren nach Anspruch 1,
**dadurch gekennzeichnet, daß**
zumindest ein Schruppfräser (5, 6, 7) der Konturform (3) wenigstens eines entsprechenden Nuttiefenbereiches (A, B, C) bereichsweise mindestens überwiegend angepaßt ist.

3. Verfahren nach Anspruch 1 oder 2,
**dadurch gekennzeichnet, daß**
zumindest ein Schruppfräser (5, 6, 7) abschnittsweise mit der Konturform (3) wenigstens eines entsprechenden Nuttiefenbereiches (A, B, C) im wesentlichen übereinstimmt.

4. Verfahren nach einem der vorhergehenden Ansprüche,
**dadurch gekennzeichnet, daß**
zumindest eine Nut (1) zur Aufnahme der inneren Enden einer Turbirienschaufel in wenigstens zwei, bezogen auf die Beabstandung zum Zentrum des Rotornabenelementes (2) hin unterschiedliche Bereiche (A, B, C) unterteilt ist und die wenigstens zwei Bereiche (A, B, C) unterschiedliche Konturformen (3) aufweisen.

5. Verfahren nach einem der vorhergehenden Ansprüche,
**dadurch gekennzeichnet, daß**
die mindestens zwei Bereiche (A, B, C) der Nuten (1) im wesentlichen durch deren eingeschnürte Bereiche definiert werden.

6. Verfahren nach einem der vorhergehenden Ansprüche,
**dadurch gekennzeichnet, daß** die Nuten (1) im wesentlichen eine Keilform aufweisen.

7. Verfahren nach einem der vorhergehenden Ansprüche,
**dadurch gekennzeichnet, daß**
die Nuten (1) mit dem sich verjüngenden Ende im wesentlichen zum Zentrum des Rotornabenelementes (2) weisen.

8. Verfahren nach einem der vorhergehenden Ansprüche,
**dadurch gekennzeichnet, daß** das Nutprofil (3) im wesentlichen tannenbaumartig ausgebildet ist.

9. Verfahren nach einem der vorhergehenden Ansprüche,
**dadurch gekennzeichnet, daß**
in dem gemäß Anspruch 1 unter d) aufgeführten Nachbearbeitungsschritt mindestens zwei Schlichtfräser (8) verwendet werden, die jeweils einen Nuttiefenbereich (A, B, C) zugeordnet sind.

10. Verfahren nach einem der vorhergehenden Ansprüche,
**dadurch gekennzeichnet, daß**
die Schruppfräser (5, 6, 7) in ihrer Längserstreckung wenigstens einen eingeschnürten Konturbereich (9) aufweisen und innerhalb und/oder über diesen Konturbereich (9) hinweg mit Schneiden versehen sind.

11. Verfahren nach einem der vorhergehenden Ansprüche,
**dadurch gekennzeichnet, daß**
die Durchmesser (15, 16, 17) der Schruppfräser (5, 6, 7) kleiner sind als die Spaltenbreite (10a, 10b, 10c) der Nut (1) des jeweiligen Tiefenbereiches (A, B, C).

12. Verfahren nach einem der vorhergehenden Ansprüche,
**dadurch gekennzeichnet, daß**
die Durchmesser (15, 16, 17) der Schruppfräser (5, 6, 7) in etwa 40 - 90 % der Spaltenbreite (10a, 10b, 10c) der Nut (1) des jeweiligen Tiefenbereiches (A, B, C) betragen.

13. Verfahren nach einem der vorhergehenden Ansprüche,
**dadurch gekennzeichnet, daß**
die Durchmesser (15, 16, 17) der Schruppfräser (5, 6, 7) in etwa 55 - 85 % der Spaltenbreite (10a, 10b, 10c) der Nut (1) des jeweiligen Tiefenbereiches (A, B, C) betragen.

14. Verfahren nach einem der vorhergehenden Ansprüche,
**dadurch gekennzeichnet, daß**
der Schlichtfräser (8) und/oder das Polierwerkzeug in seiner Konturform (12) und Querschnittsdimensionierung der Konturform (3) der gesamten Nut (1) (sämtlicher Nuttiefenbereiche (A, B, C)) entspricht.

15. Verfahren nach einem der vorhergehenden Ansprüche,
**dadurch gekennzeichnet, daß**
der Schlichtfräser (8) und/oder das Polierwerkzeug in seiner Konturform (12) der Konturform (3) der gesamten Nut (1) (sämtlicher Nuttiefenbereiche) entspricht und in seinem Querschnittsdurchmesser kleiner als die Spaltenbreite (10a, 10b, 10c) der Nut (1) dimensioniert ist.

16. Verfahren nach einem der vorhergehenden Ansprüche,
**dadurch gekennzeichnet, daß**
zumindest einer der Fräser (5, 6, 7) in seiner Wirkbewegung (25) das Rotomabenelement (2) im wesentlichen parallel zu dessen Rotationsachse (14) durchfährt.

17. Verfahren nach einem der vorhergehenden Ansprüche,
**dadurch gekennzeichnet, daß**
zumindest einer der Fräser (5, 6, 7) in seiner Wirkbewegung (25) das Rotomabenelement (2) in einer im wesentlichen linearen, mit der Rotationsachse (14), bezogen auf die X-Z-Ebene und/oder die Y-X-Ebene, einen spitzen Winkel einschließende Bewegungsbahn (25) durchfährt.

18. Verfahren nach einem der vorhergehenden Ansprüche,
**dadurch gekennzeichnet, daß**
zumindest einer der Fräser (5, 6, 7) in seiner Wirkbewegung (25) das Rotomabenelement (2) in einer zumindest bereichsweise in der X-Z-Ebene und/oder der X-Y-Ebene gekrümmten Bewegungsbahn (25) durchfährt.

## Claims

1. Method for manufacturing a rotor hub element (2) with grooves (1) for a fluid energy machine, in particular for an aircraft turbine, power station turbine or similar, whereas the radial inner ends of turbine blades are receivable in the grooves (1) and the contour shape (3) of the grooves (1) having at least one narrowed section (4),
comprising the following steps:
a. Providing a rotor hub element (2) without grooves or with pregrooves;
b. use of a first roughing cutter (5) for a first depth range (A) of the groove (1);
c. use of a second roughing cutter (6) for a second depth range (B) of the groove (1);
d. further treatment of the groove (1) using at least one finishing cutter (8) and/or polishing tool, whereas
at least one roughing cutter (5, 6, 7) is at least in sections adapted to the contour shape (3) of at least one corresponding groove depth range (A, B, C),
**characterized in that**
both roughing cutters (5, 6, 7) execute a cycloidal feed movement (23), so that the roughing cutters either pass through the rotor hub element (2) starting on a first face end (22) to a second opposing face end or cut an at least partly profiled groove (1) into the rotor hub element (2), beginning with one side of the face end (22) and ending with the groove's end; and
the contour shape (9) of the roughing cutters (5, 6, 7) corresponds substantially to the final contour shape (3) of the corresponding groove depth range (A, B, C) to be treated.

2. Method according to claim 1,
**characterized in that**
at least one roughing cutter (5, 6, 7) is partly at least substantially adapted to the contour shape (3) of at least one corresponding groove depth range (A, B, C).

3. Method according to claim 1 or 2,
**characterized in that**
at least one roughing cutter (5, 6, 7) is partly and substantially consistent with the contour shape (3) of at least one corresponding groove depth range (A, B, C).

4. Method according to one of the preceding claims,
**characterized in that**
at least one groove (1) is divided into at least two sections (A, B, C), which are different with reference to the distance to the centre of the rotor hub element (2), for receiving the inner ends of a turbine blade, and the at least two sections (A, B, C) having different contour shapes (3).

5. Method according to one of the preceding claims,
**characterized in that**
the at least two sections (A, B, C) of the grooves (1) are substantially defmed by their narrowed sections.

6. Method according to one of the preceding claims,
**characterized in that**
the grooves (1) are substantially wedge-shaped.

7. Method according to one of the preceding claims,
**characterized in that**
the tapering ends of the grooves (1) are substantially directed at the centre of the rotor hub element (2).

8. Method according to one of the preceding claims,
**characterized in that**
the groove profile (3) has substantially a fir tree-like shape.

9. Method according to one of the preceding claims,
**characterized in that**
for further treatment as stated in claim 1 under d. at least two finishing cutters (8) are used which are correspondingly assigned to one groove depth range (A, B, C).

10. Method according to one of the preceding claims,
**characterized in that**
the roughing cutters (5, 6, 7) are provided with at least one narrowed contour section (9) along their longitudinal extent and are equipped with cutters within and/or beyond the contour section (9).

11. Method according to one of the preceding claims,
**characterized in that**
the diameters (15, 16, 17) of the roughing cutters (5, 6, 7) are smaller than the gap width (10a, 10b, 10c) of the groove (1) of the corresponding depth range (A, B, C).

12. Method according to one of the preceding claims,
**characterized in that**
the diameters (15, 16, 17) of the roughing cutters (5, 6, 7) correspond to approximately 40 - 90 % of the gap width (10a, 10b, 10c) of the groove (1) of the corresponding depth range (A, B, C).

13. Method according to one of the preceding claims,
**characterized in that**
the diameters (15, 16, 17) of the roughing cutters (5, 6, 7) correspond to approximately 55 - 85 % of the gap width (10a, 10b, 10c) of the groove (1) of the corresponding depth range (A, B, C).

14. Method according to one of the preceding claims,
**characterized in that**
the contour shape (12) and the cross-section dimensioning of the finishing cutter (8) and/or the polishing tool correspond to the contour shape (3) of the whole groove (1) (of all groove depth ranges (A, B, C)).

15. Method according to one of the preceding claims,
**characterized in that**
the contour shape (12) of the finishing cutter (8) and/or the polishing tool corresponds to the contour shape (3) of the whole groove (1) (of all groove depth ranges) and the cross-section diameter of the finishing cutter and/or the polishing tool is smaller than the gap width (10a, 10b, 10c) of the groove (1).

16. Method according to one of the preceding claims,
**characterized in that**
at least one of the cutters (5, 6, 7) passes through the rotor hub element (2) in a movement (25) which is executed substantially in parallel to the rotation axis (14) of the rotor hub element.

17. Method according to one of the preceding claims,
**characterized in that**
at least one of the cutters (5, 6, 7) passes through the rotor hub element (2) in a movement (25) which is substantially linear, executing a path of movement (25) forming an acute angle with the rotation axis (14), with reference to the plane X-Z and/or Y-X.

18. Method according to one of the preceding claims,
**characterized in that**
at least one of the cutters (5, 6, 7) passes through the rotor hub element (2) in a movement (25), executing an at least partial curved path of movement (25) in the plane X-Z and/or the plane X-Y.

## Revendications

1. Procédé de fabrication d'un élément de moyeu de rotor (2) pourvu de rainures (1) d'une machine d'énergie fluide, notamment d'une turbine d'avion, d'une turbine de centrale électrique ou similaires, sachant que les extrémités intérieures radiales d'aubes de turbine peuvent être reçues dans les rainures (1) et le contour (3) des rainures (1) comporte au moins une région rétrécie (4),
avec les étapes suivantes:
a. Mise à la disposition d'un élément de moyeu de rotor (2) sans rainures ou avec pré-rainures;
b. Utilisation d'une première fraise d'ébauche (5) pour une première région de profondeur (A) de la rainure (1);
c. Utilisation d'une deuxième fraise d'ébauche (6) pour une deuxième région de profondeur (B) de la rainure (1);
d. Usinage ultérieur de la rainure (1) en utilisant au moins une fraise de finition (8) et/ou un outil de polissage, sachant que
au moins une fraise d'ébauche (5, 6, 7) est au moins en partie adaptée au contour (3) d'au moins une région de profondeur de rainures (A, B, C) correspondante,
**caractérisé en ce que**
les deux fraises d'ébauche (5, 6, 7) exécutent un mouvement d'avance cycloïdal (23), de telle sorte que les fraises d'ébauche traversent l'élément de moyeu de rotor (2) en commençant à une première face (22) et finissant à la face opposée ou fraisent une rainure (1) qui est au moins en partie profilée, dans l'élément de moyeu de rotor (2), commençant à une face (22) et finissant à la fin de la rainure; et
le contour (9) des fraises d'ébauche (5, 6, 7) correspond sensiblement au contour final (3) de la région de profondeur de rainures (A, B, C) à usiner.

2. Procédé selon la revendication 1,
**caractérisé en ce que**
au moins une fraise d'ébauche (5, 6, 7) est en partie au moins sensiblement adaptée au contour (3) d'au moins une région de profondeur de rainures (A, B, C) correspondante.

3. Procédé selon la revendication 1 ou 2,
**caractérisé en ce que**
au moins une fraise d'ébauche (5, 6, 7) correspond en partie sensiblement au contour (3) d'au moins une région de profondeur de rainures (A, B, C) correspondante.

4. Procédé selon l'une des revendications précédentes,
**caractérisé en ce que**
au moins une rainure (1) est divisée au moins en deux parties (A, B, C), qui sont différentes au niveau de la distance au centre de l'élément de moyeu de rotor (2), pour recevoir les extrémités intérieures d'une aube de turbine et les au moins deux régions (A, B, C) ont des contours (3) différents.

5. Procédé selon l'une des revendications précédentes,
**caractérisé en ce que**
les au moins deux régions (A, B, C) des rainures (1) sont sensiblement définies par leurs régions rétrécies.

6. Procédé selon l'une des revendications précédentes,
**caractérisé en ce que**
les rainures (1) ont sensiblement la forme d'une cale.

7. Procédé selon l'une des revendications précédentes,
**caractérisé en ce que**
les extrémités diminuant par rapport à la largeur des rainures (1) sont sensiblement orientées en direction du centre de l'élément de moyeu de rotor (2).

8. Procédé selon l'une des revendications précédentes,
**caractérisé en ce que**
le profilé (3) de la rainure a sensiblement la forme d'un sapin.

9. Procédé selon l'une des revendications précédentes,
**caractérisé en ce que**
pour l'usinage ultérieur, comme spécifié dans la revendication 1 d., au moins deux fraises d'ébauche (8) sont utilisées, chaque fraise est assignée à une région de profondeur de rainures (A, B, C) correspondante.

10. Procédé selon l'une des revendications précédentes,
**caractérisé en ce que**
les fraises d'ébauche (5, 6, 7) sont pourvues d'au moins une région de contour (9) rétrécie le long du côté longitudinal et sont équipées d'arrêtes de coupe dans et/ou au-delà de cette région de contour (9).

11. Procédé selon l'une des revendications précédentes,
**caractérisé en ce que**
les diamètres (15, 16, 17) des fraises d'ébauche (5, 6, 7) sont plus petits que la largeur de fente (10a, 10b, 10c) de la rainure (1) de la région de profondeur (A, B, C) correspondante.

12. Procédé selon l'une des revendications précédentes,
**caractérisé en ce que**
les diamètres (15, 16, 17) des fraises d'ébauche (5, 6, 7) s'élèvent à environ 40 - 90 % de la largeur de fente (10a, 10b, 10c) de la rainure (1) de la région de profondeur (A, B, C) correspondante.

13. Procédé selon l'une des revendications précédentes,
**caractérisé en ce que**
les diamètres (15, 16, 17) des fraises d'ébauche (5, 6, 7) s'élèvent à environ 55 - 85 % de la largeur de fente (10a, 10b, 10c) de la rainure (1) de la région de profondeur (A, B, C) correspondante.

14. Procédé selon l'une des revendications précédentes,
**caractérisé en ce que**
le contour (12) et le dimensionnement de la section transversale de la fraise d'ébauche (8) et/ou l'outil de polissage correspondent au contour (3) de toute la rainure (1) (de toutes les régions de profondeur de rainures (A, B, C)).

15. Procédé selon l'une des revendications précédentes,
**caractérisé en ce que**
le contour (12) de la fraise d'ébauche (8) et/ou l'outil de polissage correspond au contour (3) de toute la rainure (1) (de toutes les régions de profondeur de rainures) et le diamètre de la section transversale de la fraise d'ébauche (8) et/ou l'outil de polissage est plus petit que la largeur de fente (10a, 10b, 10t) de la rainure (1).

16. Procédé selon l'une des revendications précédentes,
**caractérisé en ce que**
au moins l'une des fraises (5, 6, 7) traverse l'élément de moyeu de rotor (2) dans un mouvement (25) qui est exécuté sensiblement parallèle à l'axe de rotation (14) de l'élément de moyeu de rotor.

17. Procédé selon l'une des revendications précédentes,
**caractérisé en ce que**
au moins l'une des fraises (5, 6, 7) traverse l'élément de moyeu de rotor (2) dans un mouvement (25) qui est sensiblement linéaire, exécutant un trajet de mouvement (25) en formant un angle aigu avec l'axe de rotation (14), par rapport au plan X-Z et/ou Y-X.

18. Procédé selon l'une des revendications précédentes,
**caractérisé en ce que**
au moins l'une des fraises (5, 6, 7) traverse l'élément de moyeu de rotor (2) dans un mouvement (25), en exécutant un trajet de mouvement (25) qui est au moins en partie courbé dans le plan X-Z et/ou X-Y.
